# EUROPEAN PATENT APPLICATION

(11) **EP 1 901 169 A1**
(43) Date of publication of application: **19.03.2008**
(21) Application number: 06118710.0
(22) Date of filing: 14.09.2006
(51) Int. Cl.: G06F 12/08

(54) **Arrangement with instruction cache**

(71) Applicant: SiTel Semiconductor B.V., 5215 MV 's-Hertogenbosch (NL)
(72) Inventor: Wolters, Gerardus Antonius Maria, 5384 XG Heesch (NL)
(74) Representative: van Westenbrugge, Andries

(57) **Abstract**

Method of executing a program by a processor (1). The processor (1) retrieves blocks of data from a cache (5) or a memory (3). When the processor (1) executes a jump instruction which identifies a specific address in the cache (5) to retrieve a first block of data from, it is checked in the cache (5) whether the first block of data is stored in the cache (5). If so, the first block of data is retrieved from said cache (5) to be executed by the processor (1). Immediately, a pre-fetch action is started to read a second block of data from said memory (3) which is associated with a next instruction to be executed by said processor (1).

## Description

### Field of the invention

The present invention relates to the field of an arrangement with an instruction cache.

### Background of the invention

Cache memory is nowadays widely used in all kinds of computer arrangements in order to improve access times for the processor of the computer arrangement to data stored in memory.

The cache memory is used to temporally store data from an other memory, e.g., Read Only Memory (ROM) that itself has a rather slow data access whereas the cache has a much faster data access. Several methods of cache memory management are known from the prior art to improve the speed of data access.

One of the most widely used memory managements include the following steps. The processor, upon having to read data (that includes both instructions and data like parameter values) from memory, first searches in the cache to look for the address indicated to store the required data. Now two things may happen, i.e., a hit or a miss. If a cache hit occurs the data is found in the cache and the data is transferred from the cache to the processor where it is processed. However, if a cache miss occurs the processor instructs the other memory to send the required data to the processor for further processing. If memory space is available in the cache such data from the other memory may be stored in the cache for (future) use by the processor.

However, since data access to the other memory is inherently slower than to the cache it takes rather long time for the processor to receive the required data.

### Summary of the invention

The object of the invention is to provide a method of and an arrangement for improved cache memory management that avoids cache misses to a great extend even though only a small cache is used.

To that end, the invention provides a method of executing a program by a processor, including retrieving blocks of data from at least one of a cache and a memory by the processor and after the processor has executed a jump instruction of the program which identifies a specific address in the cache to retrieve a first block of data from:
- looking in the cache whether the first block of data is stored in the cache;
- if the first block of data is identified to be present in the cache, retrieving the first block of data from the cache to be executed by the processor and immediately starting a pre-fetch action including reading at least a second block of data from the memory, the second block of data being stored in the memory on a memory address in the memory associated with a next instruction to be executed by the processor in accordance with the program;
- if the first block of data is identified not to be present in the cache, starting a fetch operation to read the first block of data from the memory to be executed by the processor.

In an embodiment, the invention relates to a computer arrangement comprising a processor, a cache connected to the processor and a memory connected to the cache, the computer arrangement being arranged to:
- to look in the cache whether the first block of data is stored in the cache;
- if the first block of data is identified to be present in the cache, to retrieve the first block of data from the cache to be executed by the processor and to immediately start a pre-fetch action including reading at least a second block of data from the memory, the second block of data being stored in the memory on a memory address in the memory associated with a next instruction to be executed by the processor in accordance with the program;
- if the first block of data is identified not to be present in the cache, to start a fetch operation to read the first block of data from the memory to be executed by the processor.

In a further embodiment, the invention relates to a computer program product comprising instructions and data allowing a computer arrangement with a processor, a cache connected to said processor and a memory connected to said cache, to perform the method as defined above.

Moreover, the invention relates to a data carrier comprising such a computer program product.

### Brief description of the drawings

The invention will be explained in detail with reference to some drawings that are only intended to show embodiments of the invention and not to limit the scope. The scope of the invention is defined in the annexed claims and by its technical equivalents. The drawings show:
Figure 1 a schematic overview of a processor with a cache memory and an other memory;
Figure 2 shows a timing diagram of cache reading and memory reading in accordance with a prior art method;
Figures 3a and 3b show timing diagrams of cache reading and memory reading in accordance with the invention.

### Detailed description of embodiments

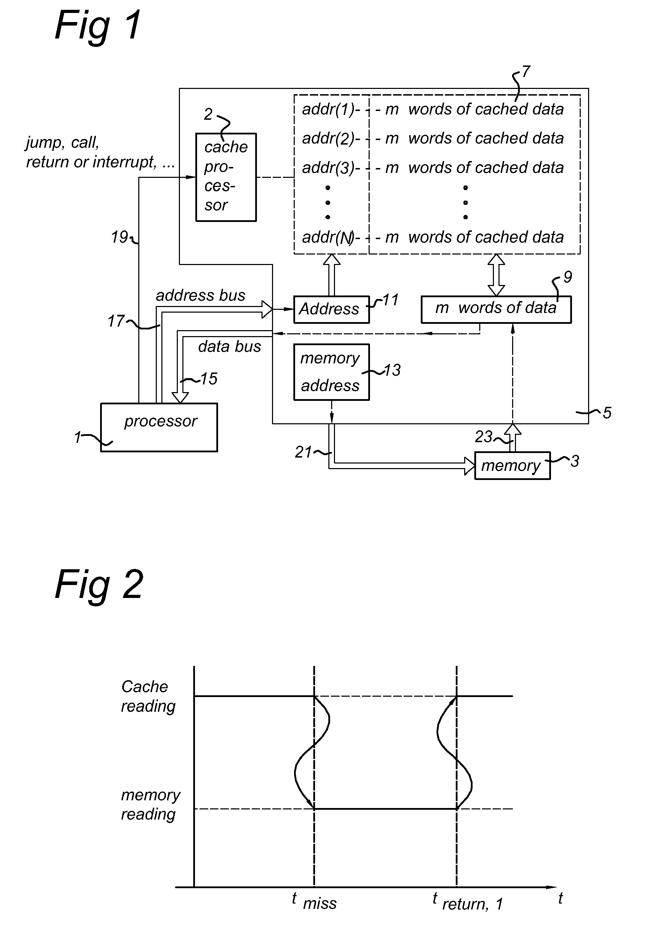

Figure 1 shows a processor 1 that is connected to a cache memory 5 (below "cache") by means of a data bus 15and an address bus 17. Moreover, the processor 1 is connected to a cache processor 2 via a control line 19. The cache processor 2 controls the operation of the cache 5 as is known to persons skilled in the art. An other memory 3 is connected to the cache 5 by means of a data bus 23 and by means of an address bus 21.

The cache 5 is shown to have cache memory addresses addr(1), ..., addr(N). Each address relates to a memory space 7 where m words of data can be stored (referred to as "cached data"). In accordance with the invention, the cache 5 is an "instruction cache", i.e., the addresses store consecutive instructions with associated data. The instructions relate to a computer program whereas the data are associated with the instructions concerned. Each address may store several instructions. E.g., an address line may be 8 or 16 words wide. In one address line of, e.g., 8 words 5 of these 8 words may be instructions whereas the other 3 words may comprise parameter values.

Via the address bus 17 processor 1 can specify to cache 5 from which address it wishes to retrieve data. This is indicated with reference number 11. The address 11 is used by the cache 5 to look-up whether the indicated address is present in cache 5.

Data in the form of m consecutive words can be written into or read from cache 5, as indicated with reference number 9. If the cache 5 has found a specified address to be available in cache 5, a "cache hit" occurs and the data from that address is transferred to the processor 1 for further processing.

Data can also be transferred from memory 3 to cache 5 via data bus 23. The address in memory 3, as indicated by reference number 13, where the data should be read from is specified via address bus 21.

Memory 3 can include one or more portions of Read Only Memory (ROM), Electrically Erasable Read Only Memory (EPROM), Random Access Memory (RAM), Dynamic Random Access Memory (DRAM), or combinations thereof Other currently known memory types, like SDRAM, or memory types to be developed in the future are not to be excluded by these examples. The ROM type of memories are typically an order of magnitude slower as to data access than cache. The RAM type memories like SDRAM typically have fast burst data access but show a longer data access time for a first member of the burst.

In most situations, the data throughput (m consecutive words) from memory 3 to cache 5 is the same as data throughput from cache 5 to processor 1.

ROM may be read based on a clock time Tₘₑₘ. The processor 1 may fetch instructions/data based on a clock time T_{proc} which is k times faster than Tₘₑₘ. Then, the ROM has to be read k words wide per ROM clock cycle Tₘₑₘ where the processor 1 fetches instructions/data from ROM one word wide per processor clock cycle T_{proc}.

In an embodiment, where burst type memory 3 is used, the memory clock cycle Tₘₑₘ may be the same as the processor clock cycle T_{proc}.

Figure 2 shows a prior art method of reading data from both cache 5 and memory 3. Processor 1 while processing a computer program has to read instructions and data on a regular basis. First, processor 1 will try to read those instructions/data from cache 5 since cache 5 has the fastest memory access. Figure 2 indicates that until time tₘᵢₛₛ the processor 1 retrieves the required instructions/data from cache 5. At tₘᵢₛₛ the cache reading fails, i.e., the address as specified by processor 1 cannot be found in cache 5. This is known in the art as "cache miss". Consecutive instructions of one and the same program will normally be stored at consecutive memory locations. As long as the program as running on processor 1 follows these consecutive instructions and as long as these consecutive instructions have been stored in cache 5, no such cache miss will occur. However, a next instruction to be executed by processor 1 may not be present in cache 5 if, e.g., cache 5 is small and has not yet stored the required next instruction or when the program contains a jump instruction requiring the processor to continue its processing with an instruction not stored on a next address but several addresses away not yet stored in cache 5. Such a jump instruction may be caused by a jump instruction with a specified new address, by a call instruction, a return instruction, an interrupt instruction requiring the program to jump to a sub-routine, etc. Such jumps may be based on a condition to be met such that it is unpredictable when the condition is met.

After a cache miss, processor 1 reads the required data from memory 3. Memory 3 reading occurs between tₘᵢₛₛ and t_{return, 1}, where the latter indicates the time that memory 3 transfers the requested instructions/data to processor 1. After t_{return, 1} processor 1 is able to read next instructions/data from cache 5 again.

If cache memory space is available after having received instructions/data from memory 3, those received instructions/data can be stored in cache 3 for future use.

As is evident from figure 2, it takes time, i.e. between tₘᵢₛₛ and t_{return,1}, before the instructions/data are available from memory 3 to processor 1. Of course, such time delays can be minimized by increasing the cache size and pre-storing as much instructions/data as possible from memory 3 into cache 5, possibly even a complete program. However, this may be an unsuitable and expensive solution in many occasions. Therefore, the invention provides a proposal for cache memory management to avoid such time delays as much as possible even in cases where a program contains more instructions/data than can be stored in cache 5.

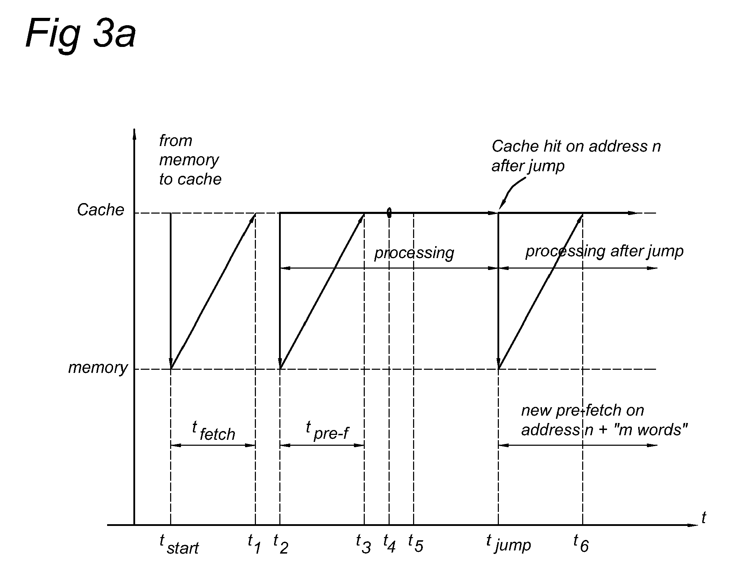

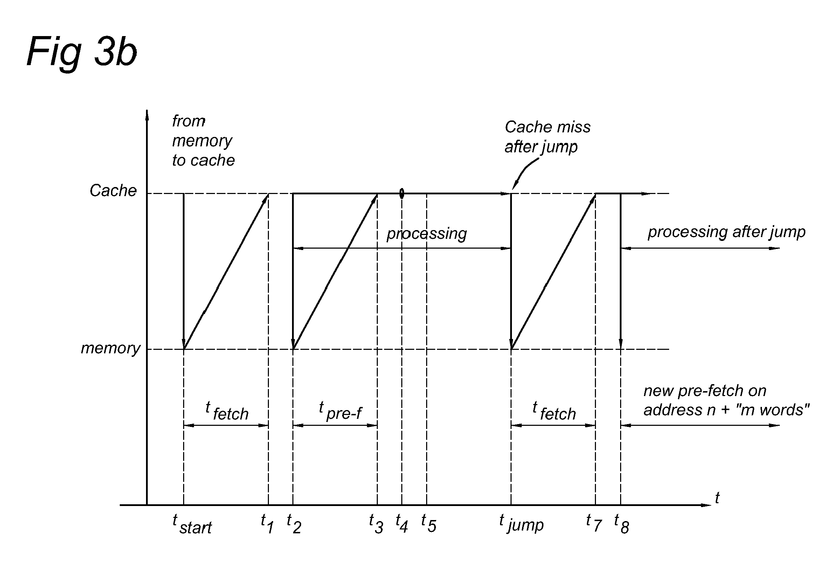

Figures 3a and 3b show examples in accordance with the present invention.

These figures show operations carried out in cache 5 and in memory 3. In the embodiment shown, at tₛₜₐᵣₜ processor 1 starts execution of a program. Processor 1 knows that the first set of instructions from a specified address has to be read from memory 3. It takes until t1 before the required first instructions/data are available from this memory address. This time period is indicated with t_{fetch}. Upon receipt, the first instructions/data are stored in cache 5. A short time after t1, i.e., at t2, a first cache hit occurs, i.e., processor 1 finds the first instructions/data in cache 5. Directly upon finding these first instructions/data in cache 5 at t2, the processor 1 instructs cache 5 to fetch second instructions/data as stored in memory 3 at a next memory address, i.e., at a memory address following the address that stores the first instructions/data. Again it takes a predetermined time period until the requested second instructions/data become available from memory 3. This time period is indicated with t_{pre-f}, indicating a time required for this pre-fetch operation. After t_{pre-f}, i.e. at time t3, cache 5 receives the requested second instructions/data from memory 3. These second instructions/data are also stored in cache 5.

After t3, more instructions/data may be retrieved from memory 3 and stored in cache 5, all relating to the program running on processor 1. To that end, cache 5 may have assigned a predetermined portion of its memory space 7 to that program.

As may be the case, the assigned memory space 7 for this program may not be large enough to store all instructions/data of this program.

Parallel to this pre-fetch operation the processor 1 processes the instructions/data as retrieved from cache 5 at t2. This first processing period may take longer than the pre-fetch operation time t_{pre-f}. This first processing is indicated to last until t4. Thus, when processor 1 again tries to retrieve instructions/data from cache 5 at t4, i.e., at the end of the first processing period, a next set of instructions/data is already available in cache 5. In most situations, executing a program means executing consecutive instructions stored at consecutive memory locations where consecutive addresses in memory store a plurality of instructions/data. So, after the first processing period, most probably processor 1 will need the set of instructions/data already stored in cache 5 as fetched from memory 3 during the first processing period.

At t5, thus, a second cache hit occurs and processor 1 can directly continue with executing instructions/data retrieved from cache 5 in a second processing period and does not have to wait for instructions/data to be read from memory 3.

After t5, processing by processor 1 can continue in the same way as explained with reference to times t4 and t5, as long as the instructions/data necessary for running the program on processor 1 are available in cache 5.

Figure 3a indicates that, at time tⱼᵤₘₚ, the processor 1 executes an instruction causing processor 1 to perform a jump to an instruction that is stored at an address already in cache 5. Such a jump may be caused by a jump instruction with a specified new address, by a call instruction, a return instruction, an interrupt instruction requiring the program to jump to a sub-routine, etc. For the sake of simplicity, here such instructions will all be referred to as "jump instruction". However, since cache 5 has not stored all instructions/data relating to the program there is a chance that an instruction/data following immediately or later in time after that jump instruction is not present in cache 5. So, if processor 1 after having executed the instruction after the jump instruction would again try to retrieve a next instruction from cache 5 there would be a chance that a cache miss occurs, forcing the processor 1 to retrieve the next instruction from memory 3. This would result in a waiting time.

In accordance with the invention, this is solved by the cache processor 2 starting a new pre-fetch operation at time tⱼᵤₘₚ. This new pre-fetch operation is as follows. Assume that the instruction/data retrieved by processor 1 from cache 5 at tⱼᵤₘₚ is stored in cache 5 at address(n) (1 ≤ n ≤ N). Then, processor 1 has executed all instructions/data stored at this address(n), i.e., as stored in m words of cached instructions/data. At the next time of retrieving an instruction/data from cache 5, the processor 1 needs the instruction/data from cache 5 that is also stored in a memory location in memory 3 associated with address(n) + "m words" in cache 5. To be sure that this instruction/data is present in cache 5 at the time processor 1 wishes to retrieve this from cache 5, cache processor 2 executes this new pre-fetch operation such that this instruction/data is read from memory 3 at time tⱼᵤₘₚ. To be able to start this new pre-fetch operation, on time tⱼᵤₘₚ the processor 1 sends a jump signal to cache processor 2 indicating that this jump instruction was executed by processor 1.

Figure 3a indicates that at t6, the instruction/data associated with address(n) in cache 5 is available to cache 5 from memory 3.

This new pre-fetch operation is executed always, no matter whether this instruction/data is already present in cache 5 or not. So, cache processor 2 does not check whether an instruction/data to be executed after an instruction/data to be executed after a jump instruction is present or not in cache 5. It simply directly starts reading next instructions/data from memory 3. This new pre-fetch operation may relate to several addresses in cache 5. In an embodiment, instructions/data relating to a predetermined number of addresses in cache 5 may be pre-fetched from memory 3 in this way. In an other embodiment, the new pre-fetch operation may relate to reading so many instructions/data from memory 3 to cache 5 as necessary to fill a predetermined memory space in cache 5.

In that way, when processor 1 tries to retrieve a next instruction/data from cache 5 after having executed an instruction/data after a jump instruction, it is almost certain that this next instruction/data is already available in cache 5. So no time needs to be wasted for a possible next fetch operation.

In an embodiment, the instructions/data as read from memory 3 on time tⱼᵤₘₚ are not stored in cache 5 but simply made available to processor 1 such that processor 1 can process the instructions/data when it is ready to do so.

Figure 3b shows an alternative embodiment. Until time tⱼᵤₘₚ everything is the same as in the embodiment according to figure 3a.. However, now, at time tⱼᵤₘₚ after the jump instruction has been executed, a cache miss occurs. I.e., the next instruction/data to be executed by processor 1 cannot be found by cache processor 2 in cache 5. Then, cache processor 2 starts a fetch operation to retrieve the required instruction/data from memory 3. This takes again a time period t_{fetch}. At t7, the instruction/data as read from memory 3 is stored in cache 5. On time t8, this instruction/data will be transferred to processor 1 for further execution. At that time t8, cache processor 2 starts a new pre-fetch action on an address in memory 3 associated with address(n) + "m words" in cache 5. Again this pre-fetch operation may relate to instructions/data for one or more addresses in cache 5, as was the case on t2.

As a further optional feature of the invention, the instructions/data necessary for the processor 1 to continue processing after having executed the jump instruction, once being stored in cache 5, remains stored in cache 5, and is not overwritten by other data as long as the program is running on processor 1. This is an advantageous embodiment in programs containing loops where a same jump instruction is executed more than once by processor 1. Then, the next instruction/data after the jump instruction is always available, and the pre-fetch method of figure 3a always applies. The pre-fetch method of figure 3b does not need to be applied anymore, then.

For the method according to the invention to work properly, it is advantageous that the throughput from memory 3 to cache 5 is equal or more than the throughput from cache 5 to processor 1.

In a further embodiment, instructions/data relating to one or more addresses in memory 3 are transferred to cache 3 and are not overwritten when they relate to portion of a program that are frequently used during executing the program. These portions may e.g. relate to inner loops of nested loops in a DSP-like (DSP = digital signal processor) algorithm, which inner loops need to be executed several times. Then, only instructions/data relating to other portions of the program are read from memory 3 in accordance with the pre-fetch method as explained above and stored in a separate portion of cache 5.

Using the pre-fetch method as explained above, may save a lot of cache space while still having a high chance that next necessary instructions/data can be read from cache 5. Since no entire programs need be stored in cache 5, the required cache magnitude may be an order of magnitude lower than is required for traditional caches, e.g., an order of 2 lower, which saves costs.

It is observed that, while processor 1 is shown to be a separate unit from cache 5 that contains its own cache processor 2, they may be integrated on a single chip. The invention is not restricted as to where the intelligence to perform the individual steps of the pre-fetch method is located.

In the annexed claims, the term "block of data" will be used. This term refers to a group of one or more instructions together with data relating to these instructions. The group may be m words wide as shown in figure 1.

## Claims

1. Method of executing a program by a processor (1), including retrieving blocks of data from at least one of a cache (5) and a memory (3) by said processor (1) and after said processor (1) has executed a jump instruction of said program which identifies a specific address in said cache (5) to retrieve a first block of data from:
• looking in said cache (5) whether said first block of data is stored in said cache (5);
• if said first block of data is identified to be present in said cache (5), retrieving said first block of data from said cache (5) to be executed by said processor (1) and immediately starting a pre-fetch action including reading at least a second block of data from said memory (3), said second block of data being stored in said memory (3) on a memory address in said memory (3) associated with a next instruction to be executed by said processor (1) in accordance with said program;
• if said first block of data is identified not to be present in said cache (5), starting a fetch operation to read said first block of data from said memory (3) to be executed by said processor (1).

2. Method in accordance with claim 1, wherein, after said pre-fetch action, said second block of data is stored in said cache (5).

3. Method in accordance with claim 1 or 2, wherein said pre-fetch action includes at least reading a plurality of blocks of data from said memory (3), said plurality of blocks of data starting with said second block of data followed by blocks of data stored at consecutive memory addresses next to said memory address.

4. Method in accordance with any of the preceding claims, wherein said first block of data remains in cache (5) after being executed by said processor (1).

5. Method in accordance with any of the preceding claims, wherein said cache (5) stores blocks of data relating to frequently executed loops of a program which blocks of data are not overwritten by any pre-fetched or fetched blocks of data during execution of said program.

6. Computer arrangement comprising a processor (1), a cache (5) connected to said processor (1) and a memory (3) connected to said cache (5), said computer arrangement being arranged to:
• to look in said cache (5) whether said first block of data is stored in said cache (5);
• if said first block of data is identified to be present in said cache (5), to retrieve said first block of data from said cache (5) to be executed by said processor (1) and to immediately start a pre-fetch action including reading at least a second block of data from said memory (3), said second block of data being stored in said memory (3) on a memory address in said memory (3) associated with a next instruction to be executed by said processor (1) in accordance with said program;
• if said first block of data is identified not to be present in said cache (5), to start a fetch operation to read said first block of data from said memory (3) to be executed by said processor (1).

7. Computer arrangement according to claim 6, wherein said cache (5) comprises a cache processor (2).

8. Computer program product comprising instructions and data allowing a computer arrangement with a processor (1), a cache (5) connected to said processor (1) and a memory (3) connected to said cache (5), to perform the method as claimed in any of the claims 1-6.

9. Data carrier comprising a computer program product as specified in claim 8.
